Europäisches Patentamt

(19) European Patent Office

Office européen des brevets

(11) Publication number: **0 246 497**
**A2**

(12) **EUROPEAN PATENT APPLICATION**

(21) Application number: 87106585.0

(22) Date of filing: 07.05.87

(51) Int. Cl.³: **B 29 D 30/08**

(30) Priority: 20.05.86 IT 6741586

(43) Date of publication of application:
25.11.87 Bulletin 87/48

(84) Designated Contracting States:
AT BE DE ES FR GB IT LU NL SE

(71) Applicant: THE FIRESTONE TIRE & RUBBER COMPANY
1200 Firestone Parkway
Akron, Ohio 44317(US)

(72) Inventor: Carpentier, Jean M.
20 Rue Victor Hugo
F-62700 Labuissiere(FR)

(72) Inventor: Vorih, William J.
Via Callimaco 14
I-00100 Roma(IT)

(74) Representative: Prato, Roberto et al,
c/o Ingg. Carlo e Mario Torta Via Viotti 9
I-10121 Torino(IT)

(54) Method for manufacturing a first stage radial tire for vehicles.

(57) A method for manufacturing a first stage radial tire consisting of two superimposed tubular layers, of which the first, composed solely of elastomeric materials, is formed from a central innerliner, two lateral abrasion strips and two sidewalls, and the second consists of a body ply formed from a textile layer coated on both sides with elastomeric material and obtained by means of parallel textile cords lying in radial planes of the tire, the method providing for obtaining the body ply from a textile strip equal in width to the circumferential development of a tire building drum, and the cords of which strip constitute an axial warp, and for transversely cutting the aforementioned textile strip, after first coating it on both sides with elastomeric material, into portions equal in length to the axial development of the first stage tire.

EP 0 246 497 A2

./...

Fig.1

METHOD FOR MANUFACTURING A FIRST STAGE RADIAL TIRE FOR VEHICLES

The present invention relates to a method for manufacturing a first stage radial tire.

First stage radial tires generally comprise at least two superimposed tubular layers, of which the inner layer consists solely of elastomeric material and is formed from a plurality of laterally spliced strips consisting of various elastomeric materials. The said strips usually consist of a central innerliner, two lateral abrasion strips and two sidewalls. The outer layer, known as the body ply, on the other hand, usually consists of a textile layer with both its sides coated with elastomeric material and comprising parallel textile cords lying in radial planes of the tire.

In known tire manufacturing plants as of present, the body ply is usually formed from textile cords which, after undergoing a series of processing operations, are arranged parallel with one another to form the axial warp of a textile strip, the weft of which strip is formed by means of transverse yarns having a minimum possible tensile strength and the sole function of which is to ensure constant spacing of the cords of the axial warp during subsequent processing operations.

Such processing operations usually consist of a

1

calendering operation, during which both sides of the aforementioned textile strip are each coated with a rubber layer to produce a first rubber-coated strip on which the cords are arranged axially. This first strip is then subjected to a cutting and splicing operation, during which the above first strip is cut transversely into axial portions equal in length to the axial development of the first stage radial tire being produced. The said axial portions are then turned through 90° and the original lateral ends of the same are spliced together to form a second rubber-coated strip, hereinafter referred to as a rubber-coated composite strip or composite strip, on which the said cords are arranged transversely. The above composite strip is usually coiled onto a drum from which it is unwound and fed directly onto a tire building drum and onto the said layer of elastomeric material.

In more detail, an operator keeps a free end of the composite strip in a fixed position over the tire building drum which, moving through one full turn, feeds off a sufficient length of composite strip for forming the body ply. The operator then cuts the composite strip transversely and splices together, on the tire building drum, the opposite ends of the so-obtained axial portion of composite strip, in such a known manner so as to form

2

0246497

the body ply of a typical prior art first stage radial tire.

Clearly, the above method of producing the body ply involves considerable cost, in that, besides involving numerous operations for producing the said composite strip, it also entails the production of a specific composite strip for each tire size (circumferential development and width). Furthermore, producing a tire with more than one body ply, i.e. having a number of superimposed layers, would require the simultaneous use of at least two different composite strips, possibly of different widths.

Employment of the said composite strip also involves numerous drawbacks deriving from its structure. In the first place, the composite strip, as already stated, presents a series of transverse splices which may result in unacceptable vibration of the finished tire, if located too close to the splice made by the operator on the tire building drum for forming the body ply.

Furthermore, the prior art composite strip presents less than desireable axial stability, in that, the only elements preventing uncontrolled stretch of the composite strip, as it is fed onto the tire building drum, are the extremely low-tensile-strength yarns forming the weft of the aforementioned first strip. Consequently, the tensile stress exerted on the composite strip for unwinding it and subsequently winding it onto the tire building drum may be sufficient to cause excessive local stretching of the composite strip, and consequent uneven distribution of the radial cords along the periphery of the tire.

Finally, employment of the noted prior art composite strip necessarily requires the use of cumbersome equipment for supporting and feeding the composite strip itself, which equipment must be located adjacent to the tire building drum, and makes it difficult to simultameously feed the said drum with the elastomeric strips for the inner layer of the first stage tire.

It is an object of the present invention to provide a method for manufacturing a first stage tire, which method provides for dispensing with the production and employment of the aforementioned composite strip.

It is a further object of the present invention to provide a method for manufacturing a first stage tire, which method provides for maximum possible clearance of the area adjacent to the tire building drum, for enabling the employment of a straightforward, reliable system for feeding the elastomeric strips constituting the inner layer of the first stage tire.

According to the present invention, there is provided a method for manufacturing, on a rotary tire building drum, a first stage radial tire comprising two superimposed tubular layers, a first of the said two layers being arranged inside the second, the said second layer comprising at least one body ply, in turn, comprising a rubber-coated textile layer including parallel textile cords lying in radial planes of the said tire, the said method being characterized by the fact that the said body ply is produced from a textile strip substantially equal in width to the circumferential development of the said tire building drum, the said cords constituting the axial warp of the said textile strip; the said textile strip being coated with elastomeric material for forming a rubber-coated textile strip, the said coated textile strip being fed axially towards the said tire building drum in a direction substantially parallel with the axis of rotation of the said drum, and being subjected to a transverse cutting operation for producing axial portions substantially equal in length to the axial development of the first stage tire, and the said axial portions being fed directly onto the said tire building drum.

5

The said first layer is composed solely of elastomeric materials and comprises a central innerliner, two lateral abrasion strips and two sidewalls, which are preferably obtained by direct extrusion onto a preassembly table adjacent to the said tire building drum, for forming a continuous elastomeric strip having its longitudinal axis substantially perpendicular to the axis of rotation of the said tire building drum, and being equal in width to the said axial development of the said first stage tire; the said continuous elastomeric strip being transversely cut into axial pieces substantially equal in length to the said circumferential development of the said first stage tire, and the said axial pieces being fed axially and directly onto the said drum and being wound about the same in such a manner as to form the said first layer.

According to a preferred embodiment of the present invention, the said coated textile strip is tubular in shape and is obtained by transversely folding the said textile strip in such a manner as to form a continuous cylindrical hose equal in diameter to the said body ply; the said continuous hose being fed, in a direction substantially coaxial with the said axis of rotation of the said drum, through a tubular extrusion die, in such a manner as to be coated with the said elastomeric

6

material and so form the said coated tubular strip, which is then subjected to the said transverse cutting operation for obtaining the said portions which are tubular in shape and fed axially onto the said drum.

According to another preferred embodiment of the present invention, the said coated textile strip is tubular in shape and obtained by transversely folding the said textile strip in such a manner as to form a continuous cylindrical hose equal in diameter to the said body ply; the said continuous hose being fed, in a direction substantially parallel with the said axis of rotation of the said drum, through a tubular extrusion die, in such a manner as to be coated with the said elastomeric material and so form the said coated tubular strip, which is then subjected to a preliminary axial cutting operation performed along a generating line of the said coated tubular strip, for obtaining a flat coated strip substantially equal in width to the circumferential development of the said tire building drum, the said flat coated strip then being subjected to the said transverse cutting operation for obtaining flat axial portions substantially equal in length to the axial development of the said first stage tire, and the said flat portions being fed onto the said drum directly and transversely in relation to both the axis of

7

rotation of the said drum and the said cords.

According to a further preferred embodiment of the present invention, the said coated textile strip is a flat strip, and is obtained by coating the said textile strip with elastomeric material by means of a calendering operation; the said flat coated textile strip being fed axially in a direction parallel with the axis of the said drum and being subjected to the said transverse cutting operation for obtaining flat axial portions, and the said flat axial portions being supplied to the said drum in a direction substantially perpendicular to the said travelling direction of the said coated textile strip and transversely in relation to both the said cords and the axis of rotation of the said drum.

The present invention will now be described by way of example with reference to the accompanying drawings in which:

Figure 1 is a schematic perspective view of a plant implementing the method according to the present invention;

Figure 2 is a section along line II-II of Fig. 1;

Figure 3 is an enlarged schematic view in perspective of a first variation of a detail of Fig. 1;

Figure 4 is an enlarged schematic view in

8

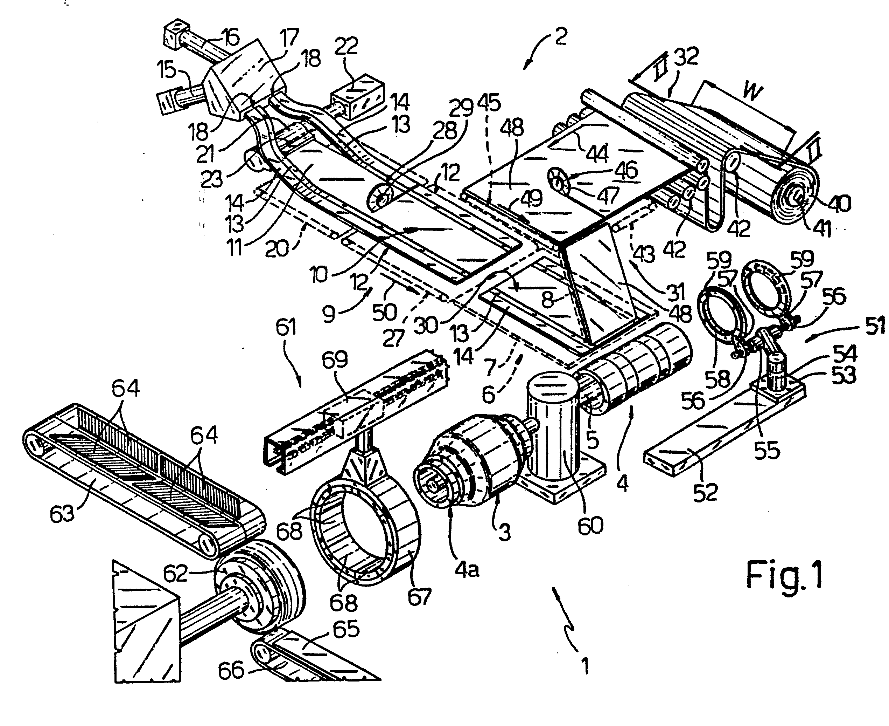

perspective of a second variation of a detail of Fig. 1;

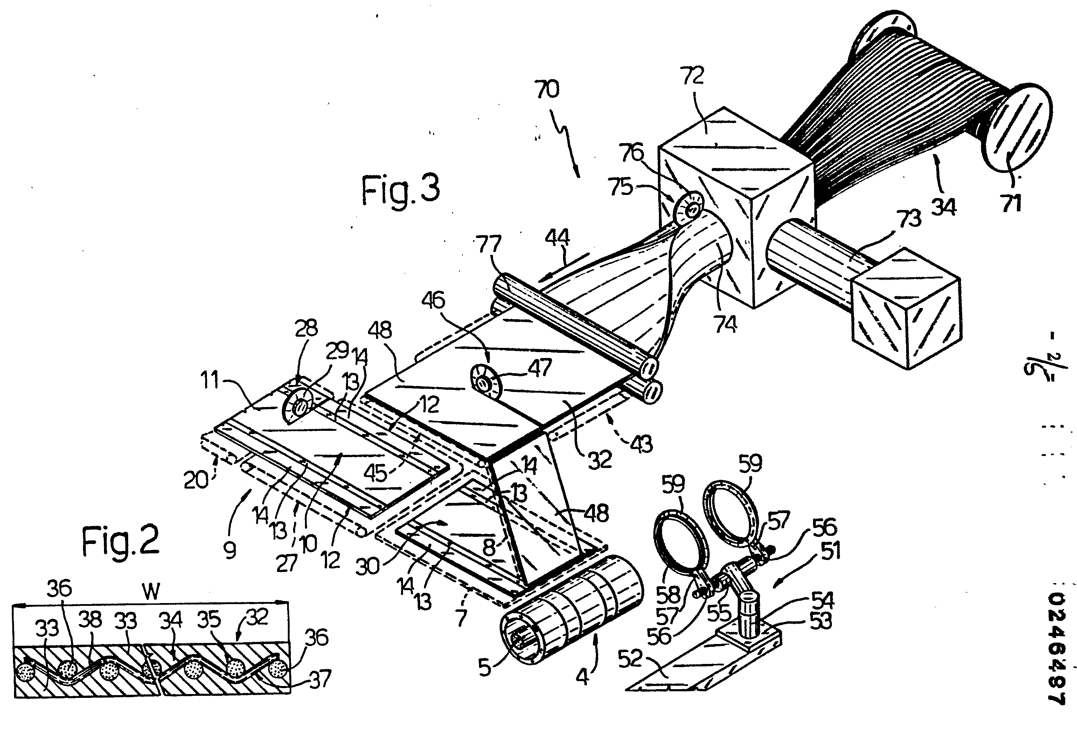

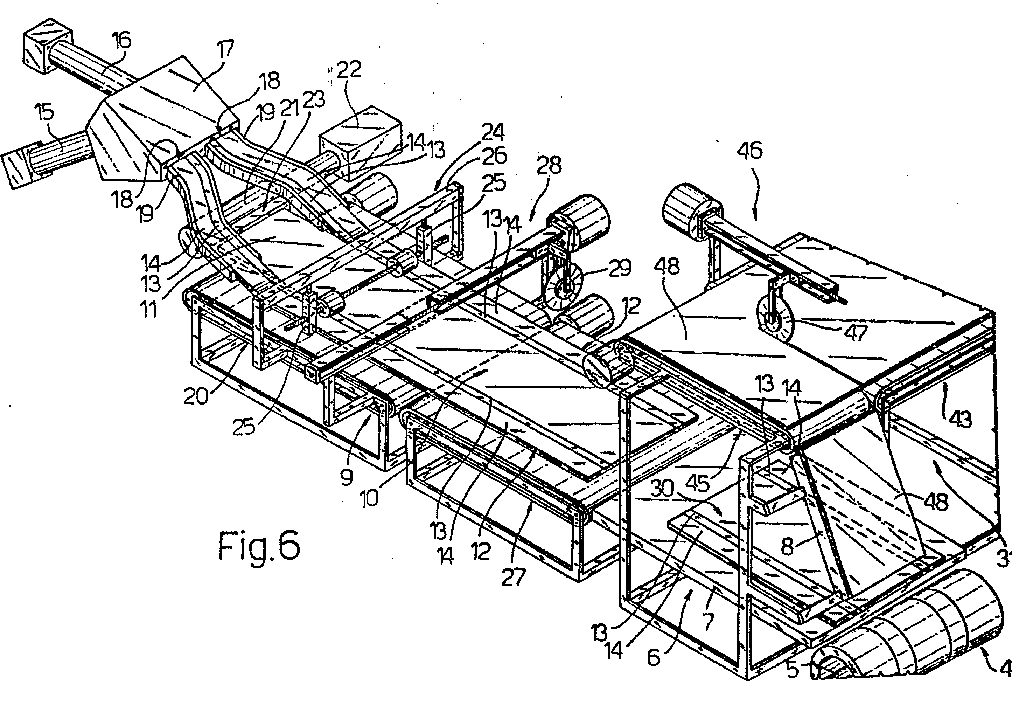

Figure 5 is an enlarged perspective view, with parts removed for clarity, of a detail of Fig. 3; and

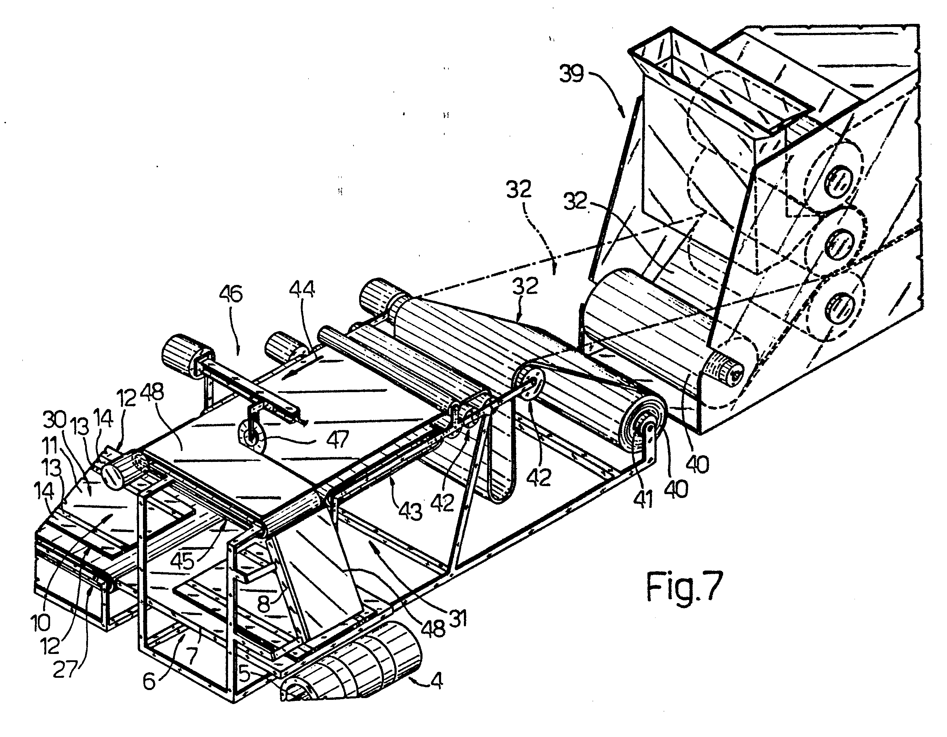

Figures 6 and 7 are enlarged views of respective details of Fig. 1.

Numeral 1 in Fig. 1 indicates a radial tire manufacturing plant comprising a department 2 for building first stage tires 3.

As shown in Figs. 1, 6 and 7, department 2 includes a tire building drum 4 consisting, in this case, of a known type of unistage drum, but which, as explained in more detail later on, could consist of a prior art first stage drum.

Drum 4 is mounted on a powered shaft 5 set up horizontally and coaxial with drum 4.

As shown, particularly in Figs. 6 and 7, department 2 also includes a known type of dispensing device 6 located behind drum 4 and comprising two superimposed tables 7 and 8 inclined differently, both located parallel with shaft 5, extending in directions substantially tangent with drum 4, and having free edges facing and located a given distance from the rear periphery of drum 4.

As shown in Fig. 6, lower table 7 constitutes the end portion of a line 9 for forming, assembling and

9

supplying an assembled elastomeric strip 10 substantially equal in width to the axial development of tire 3. Strip 10 comprises a central portion, consisting of an innerliner 11 usually of butyl rubber, and two lateral portions 12. Each portion 12 comprises two strips 13 and 14, of which the first is located internally and consists of an abrasion strip of elastomeric material, whereas the second is located externally and consists of a sidewall.

Line 9 extends in a direction substantially perpendicular to the axis of drum 4 and comprises two superimposed extruders 15 and 16, the first designed to form two abrasion strips 13, and the second to form two sidewalls 14.

Both extruders 15 and 16 supply a single extrusion head 17 having two dies 18 from each of which is produced, in use, a lateral portion 12 consisting of an abrasion strip 13 and a sidewall 14 which are prespliced together as they emerge, side by side, from respective die 18.

Dies 18 are connected to respective downward-sloping, converging channels 19 terminating on an assembly table or conveyor 20 and separated by a distance substantially equal to the width of innerliner 11.

Underneath channels 19, there is located an extrusion head 21 of a third extruder 22, a die 23 of which is located substantially level with table 20 and supplies innerliner 11 on to the same, between lateral portions 12.

As they travel along table 20, innerliner 11 and lateral portions 12 are laterally spliced together by a splicing device 24 located transversely over table 20 and comprising two lateral assembly blocks 25 spaced apart by an adjustable distance equal to the width of strip 10, and mounted in a sliding manner on a fixed crosspiece 26 of a portal not shown in the drawing. Both blocks 25 engage the outer side edges of lateral portions 12 which they push into contact with the side edges of inneliner 11 while, at the same time, complying with any axial distortion of innerliner 11.

The output end of table 20 faces the input end of a conveyor 27 to which the front end of strip 10 is supplied by passing through a cutting station 28 located between table 20 and conveyor 27 and comprising a cutting blade 29 which cuts strip 10 transversely into pieces substantially equal in length to the circumferential development of drum 4. Conveyor 27 travels initially at the same speed as table 20, in such a manner as to receive a front piece of strip 10, and,

11

- 12 -

after cutting, accelerates so as to carry off cut piece 30 and feed it onto table 7.

Table 8, located above table 7 constitutes the end portion of a line 31 for supplying a rubber-coated textile strip 32 the width W of which is substantially equal to the circumferential development of drum 4.

The above term "substantially equal" is taken to mean that the said width W exceeds the circumferential development of a cylinder, said cylinder being equal in diameter to drum 4 increased by the thickness of strip 10, and by the amount required for overlapping and splicing together the opposite side edges of strip 32.

As shown in Fig. 2, coated textile strip 32 is obtained by coating each side of a textile strip 34, substantially equal in width to the circumferential development of drum 4, with a respective layers 33 of elastomeric material. Textile strip 34 comprises an axial warp 35, consisting of parallel textile cords 36 of relatively high tensile strength and evenly spaced along the width of textile strip 34, and a transverse weft 37 consisting of transverse yarns 38. The tensile strength of yarns 38 is the minimum compatible with their function of mutually securing in place axial cords 36 during a series of known processing operations to which cords 36 are subjected prior to being coated with

12

elastomeric material. The said coating is obtained, in known manner, by means of a calender 39 by which the two layers 33 are applied on to textile strip 34 to obtain coated textile strip 32 which is then wound into a coil 40.

The term "textile" as used herein is deemed to be inclusive of any fiber, be it organic, artificial, and of any composition including, but not limited to, glass, steel, or aramid, for example.

As shown in Fig. 7, coil 40 is mounted, in a rotary manner, on a fixed supporting axle 41 arranged horizontally and transversely in relation to the rotation axis of drum 4, and constitutes the initial element of line 31. Alternatively, coil 40 may be dispensed with, and the initial element of line 31 may consist of calender 39 itself.

Line 31 also includes a roller bed 42 extending parallel with the axis of rotation of drum 4 and located between coil 40 and a conveyor 43 aligned with and substantially on a level with roller bed 42. Conveyor 43 is designed to receive, off roller bed 42, the coated textile strip 32 wound off coil 40, and to feed the free end of coated textile strip 32, in a direction parallel with the rotation axis of drum 4, as shown by arrow 44, through a cutting station 46 and on to a further

13

conveyor 45.

Conveyor 45 is located directly over an end section of line 9, and cutting station 46 is located between conveyors 43 and 45 and comprises a blade 47 designed to move transversely in relation to the travelling direction of conveyor 43, and back and forth at a given frequency for cutting coated textile strip 32 transversely into axial portions 48. Said axial portions 48 are then fed one at a time and in step-by-step manner off conveyor 45 and on to table 8, in the direction indicated by arrow 49 (Fig. 1), said direction being perpendicular to arrow 44 and parallel with arrow 50, the latter being perpendicular to the axis of drum 4 and indicating the travelling direction of strip 10 along line 9.

Consequently, on conveyor 45 or table 8, each portion 48 presents cords 36 arranged transversely in relation to arrow 49, and presents, in the direction of arrow 49, a length substantially equal to the circumferential development of drum 4, and a width which, by adjusting the cutting frequency of blade 47 to the travelling speed of conveyor 43, equals the width of the body ply of first stage tire 3 to be formed on drum 4. Consequently, each portion 48 presents the exact dimensions of the body ply of first stage tire 3, and

14

respective cords 36 lie parallel with the axis of drum 4, thus enabling the said portion 48 to be loaded directly on to drum 4 for forming the body ply of first stage tire 3.

From the foregoing description, it also follows that each portion 48 involves absolutely no splices, by virtue of its being obtained by transversely cutting continuous coated textile strip 32 which, in turn, is totally free of any transverse splices.

From the foregoing description, it also follows that feeding coated textile strip 32 along line 31 involves no problems in regard to the structural stability of coated textile strip 32, by virtue of cords 36 in strip 32 lying parallel with arrow 44 and thus providing for highly effective resistance to stretching of strip 32. The same does not apply to known prior art first stage tire manufacturing plants, in which the composite coated textile strip supplied to drum 4 presents cords arranged transversely in relation to the travelling direction, with the result that the only elements resisting unpredictable local stretching of the composite strip are the said weft yarns which, as already stated, present an extremely low tensile strength. The slightest increase in supply tension therefore results in breakage of the weft yarns and, consequently, local stretching of the composite strip, uneven local distribution of the cords and rejection of any tires produced from locally-stretched parts of the said composite strip.

Finally, from the foregoing description, it also follows that feeding coated textile strip 32 in the direction of arrow 44 parallel with the axis of drum 4 provides for clearing the entire area behind drum 4, thus enabling direct extrusion and full preassembly of strip 10 which may be fed directly on to drum 4 in the direction of arrow 50. Such would not be possible, were the area behind drum 4 to be occupied by a body ply supply line, as in any present first stage tire manufacturing plant.

As shown in Fig. 1, in front of drum 4 there is located a bead feeding unit 51 comprising a fixed guide 52 parallel with the axis of drum 4 and supporting a slide 53 designed to move, by virtue of actuating means not shown and consisting, for example, of a pneumatic cylinder, between a working position, wherein slide 53 is arranged facing the center line of drum 4, and an idle position, wherein slide 53 is located beyond the free end of drum 4 towards coil 40. From slide 53, there extends upwards a column 54 fitted on the top end with a swivel pin 55 parallel with the axis of drum 4 and

16

fitted with two bushings 56 arranged symmetrically in relation to column 54 and at an adjustable distance from each other. From each of bushings 56, there extends radially outwards an arm 57 fitted on the end with a hoop 58 consisting, at least partly, of ferromagnetic material and arranged with its axis parallel with the axis of drum 4. Hoops 58 are arranged coaxial with each other, and each consist, in known manner, of two releasable halves. Each hoop 58 is designed to support a known respective metallic bead 59 complete with respective filler.

Via actuating means (not shown) housed inside column 54 and consisting, for example, of a double-acting pneumatic cylinder powering a rack connected to a sprocket on pin 55, hoops 58 may be turned about the axis of pin 55 between a lowered working position, wherein hoops 58 are arranged coaxial with drum 4, and a raised idle position, wherein hoops 58 are arranged substantially over column 54.

A first stage tire 3 is manufactured as follows:

First of all, an operator takes hold of the front edge of a piece 30 of elastomeric strip 10 on table 7 and feeds it onto drum 4, which is turned by shaft 5 until piece 30 is fully wound about the said drum 4. The opposite ends of wound piece 30 are then spliced

17

together by the operator who, after turning drum 4 through a given initial angle, feeds on to the said drum 4 a portion 48 of calendered textile strip 32 from table 8.

Subsequent to a full turn of drum 4, portion 48 is wound completely onto drum 4 and its ends are spliced together to form the body ply of first stage tire 3.

It should be pointed out that, inside the material wound on to drum 4, only two splices exist, one on the inner layer of elastomeric material, and the other on the external body ply, and that the said two splices are spaced a given distance apart, said distance being adjustable by the tire builder regulating the aforementioned initial rotation angle of drum 4.

The same does not apply to first stage tires manufactured in known prior art tire plants in which, to the said two splices, may be added, in totally random manner and in a totally random location, a further splice on the body ply, by virtue of the said body ply being obtained from a coated composite textile strip obtained by transversely splicing together a number of strip portions. Should the said further splice be located within 15-10 centimeters of either of the aforementioned splices, the respective tire must be rejected, or the material manually adjusted thereby

18

reducing productivity.

Further grounds for rejecting first stage tires manufactured in known plants consist in the fact that the innerliner, consisting substantially of butyl rubber, presents, as it cools, both overall and totally unpredictable local shrinkage resulting in local swelling of the innerliner, which may induce totally unacceptable vibration on the finished tire. This drawback is overcome in the aforementioned department 2, in that, as already stated, the particular structure and, therefore, the particular travelling direction of coated textile strip 32 in the direction of arrow 44 enable direct extrusion of strip 10 on to drum 4, and permit drum 4 to be fed with pieces 30 having a relatively high-temperature innerliner 11 on which the said unpredictable local shrinkage has not yet taken place. Innerliner 11 is therefore perfectly flat and maintained so by respective superimposed portion 48 which, being internally reinforced by cords 36, prevents any deformation of innerliner 11 as it cools.

Once the body ply has been formed, an operator shifts hoops 58, fitted beforehand with respective beads 59, from the raised idle position into the lowered working position, and then shifts slide 53 from the idle position into the working position.

As slide 53 is shifted, hoops 58 and respective beads 59 pass over drum 4, on the outside of the body ply, passing between the front ends of tables 7 and 8 and drum 4. Drum 4 is then operated in known manner so as to secure beads 59 which are released in position by respective hoops 58 which, upon opening, allow slide 53 to return to its idle position.

At this point, mention should be made of a number of further important advantages deriving from the supply direction of coated textile strip 32 and the manner in which portions 48 are obtained from it.

Firstly, only one coated textile strip 32 is required for manufacturing tires of different size but with the same inside diameter. For changing size, cutting station 46 simply be set so as to produce portions 48 of different width, but still of length W equal to both the width W of strip 32 and the circumferential development of drum 4.

Such does not apply to known plants on which changing size, with the same inside diameter, automatically involves changing the coated composite strip from which the body plies are obtained.

A further advantage relates to the existence on the market of numerous types of tires comprising two or more superimposed body plies, usually of decreasing width.

Manufacturing such tires in known plants is always a problem, due to the fact that the building drum must be supplied with a different coated composite strip for each body ply, which usually entails constructing a specific plant or at least a specific department for each type of multiple-ply tire being produced.

This problem does not exist on the above first stage department 2, in that, for switching from a one-ply to, for example, a two-ply tire, cutting station 46 need simply be controlled in such a manner as to produce, for each tire, in a first cutting operation, a first portion 48 equal in width to the first body ply, and, in the next cutting operation, a second portion 48 equal in width to the second body ply, though still employing the same coated textile strip 32.

In the embodiment shown in Fig. 1, drum 4 is a unistage drum, the shaft 5 of which is mounted on a vertical rotary turret 60 in opposition to a second unistage drum 4a.

Once beads 59 are mounted on drum 4, turret 60 is turned 180° about its own axis, during which rotation, drum 4 starts shaping first stage tire 3 into a torus, and at the end of which rotation, drum 4 moves into the position previously occupied by drum 4a which accordingly moves into position facing tables 7 and 8.

21

In its new position, drum 4 is located, inside a second stage department 61, facing and coaxial with a known type of collapsible drum 62 onto which have been fed in succession, by means of a known conveyor 63, tread plies 64 having oppositely-inclined inner metal wires. The said tread plies combine to form an outer belt on to which is fed, in known manner, a tread 65 by means of a further conveyor 66.

The annular package so formed is released by collapsible drum 62 and gripped externally by a known type of transfer ring 67 coaxial with drum 4 and 62, said ring 67 having internal radially-inward-moving segments 68 and being mounted on the upper crosspiece 69 of a portal (not shown) in such a manner as to slide between a first position, wherein ring 67 is located outside drum 62, and a second position, wherein ring 67 is located outside drum 4a.

When ring 67 reaches the said second position, drum 4 continues, in known manner, to build first stage tire 3, until the outer surface of the respective body ply adheres to the inner surface of the belt consisting of tread plies 64, and sidewalls 14 are closed on to the side edges of tread 65 to produce a finished green tire.

After being stitched with a known type of stitching device (not shown), the said green tire may be unloaded

22

off drum 4 and sent off for curing.

After being built on drum 4 inside department 2, first stage tire 3 may obviously be unloaded off drum 4 and sent to second stage department 61. In this case, department 2 and 61 may be completely separate, and drum 4 in department 2 may consist of a first stage drum turning about a fixed axis, whereas drum 4a in department 61 may be fully independent of drum 4 and consist of a second stage drum also turning about a fixed axis.

The variation shown in Fig. 3 relates to a first stage department 70 similar to department 2, and the component parts of which are indicated using the same reference numerals indicating the corresponding parts in department 2.

The only difference between department 70 and 2 is that textile strip 34 is wound off a coil 71 and folded transversely in such a manner as to form a hose which is fed, in the direction of arrow 44, through a tubular head 72 on an extruder 73. Inside head 72, textile strip 34 is coated with two rubber layers 33 and comes out of head 72 in the form of a continuous rubber-coated hose 74 the inside diameter of which is substantially equal to the outside diameter of drum 4.

Hose 74 is fed, still in the direction of arrow 44, through a cutting station 75 inside which it is

23

subjected by blade 76 to a preliminary cutting operation along its generating line. Once cut axially, hose 74 is flattened out, by means of a flattening roller 77, into a coated textile strip 32, which is fed directly on to conveyor 43 and to transverse cutting station 46.

As compared with department 2, the above department 70 presents the indisputable advantage of replacing calender 39 with a far cheaper and less cumbersome extruder 73.

Furthermore, in department 70, portions 48 are supplied to drum 4 at relatively high temperature, and are generally stitched to respective pieces 30 better than in department 2.

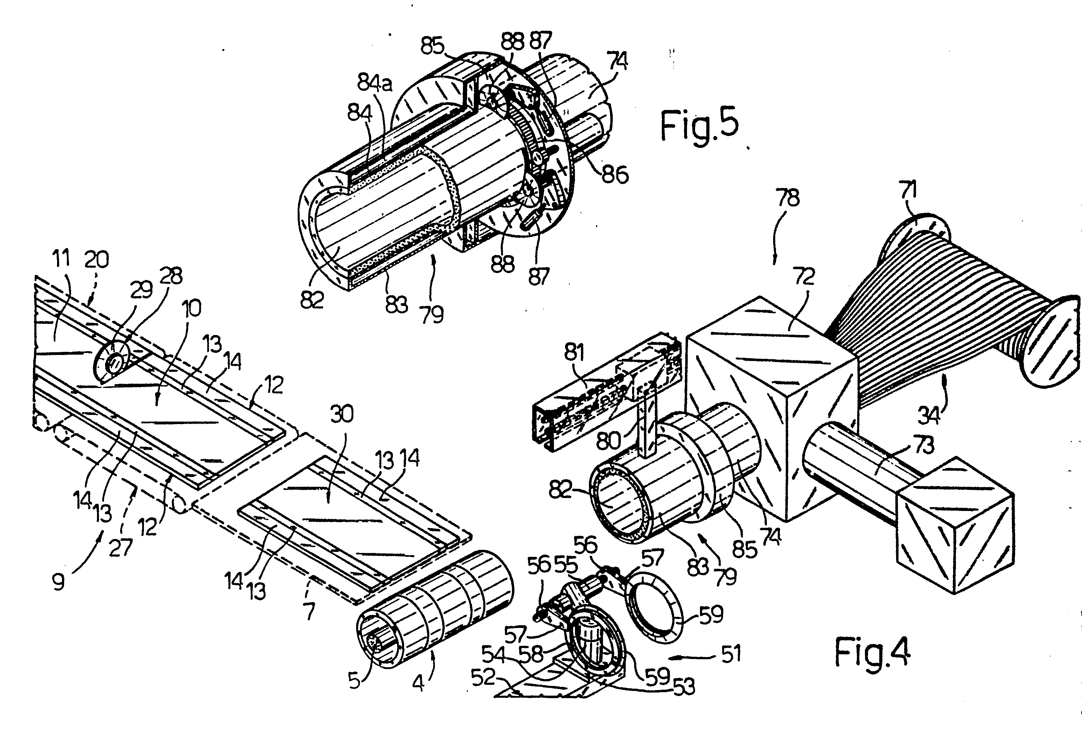

The variation shown in Figs 4 and 5 relates to a first stage department 78 similar to department 70, and the component parts of which are indicated using the same reference numerals indicating the corresponding parts in department 70.

Department 78 differs from department 70, in that, tubular head 72 on extruder 73 is located coaxial with drum 4, and hose 74, instead of being cut axially, is fed directly into a tubular transfer element 79 coaxial with drum 4 and from the outer periphery of which there extends upwards an upright 80 the top end of which is

24

connected, in transversely-sliding manner, to a crosspiece 81 extending over and parallel with the axis of drum 4.

Tubular transfer element 70 is designed to receive an end piece of hose 74, to cut it circumferentially into a tubular portion 82 equal in length and diameter to the body ply of tire 3, to slide along crosspiece 81 with cut tubular portion 82 held inside, and to fit cut tubular portion 82 onto drum 4, over the layer obtained from piece 30 of strip 10.

For performing the above operations, tubular transfer element 79 comprises, as shown, particularly in Fig. 5, a tubular body 83 having an inner radially-pierced skirt 84 defining, between the surface of tubular body 83 and skirt 84 itself, an annular chamber 84a communicating with a vacuum source (not shown). On the end facing extruder 73, tubular body 83 is fitted with a hollow toroidal body 85 inside which is mounted, in rotary manner, a powered ring 86 coaxial with tubular body 83. To ring 86 are connected, via the interposition of respective radial actuators 87, two blades 88 designed to move radially, inside body 85 and by virtue of actuators 87, between an idle position outside the outer surface of hose 74, and a working position in which blades 88 intersect hose 74. When

25

blades 88 are in the said working position, one turn of ring 86 about the axis of tubular body 83 results in hose 74 being cut circumferentially into tubular portion 82 which is held taut and perfectly cylindrical inside tubular body 83 by the vacuum exerted through skirt 84. Such a vacuum is cut off by limit devices when transfer element 79 moves into the correct position about drum 4, and tubular portion 82 is allowed to contract about the elastomeric inner layer on tire 3, in such a manner as to form the body ply of the same.

Transfer element 79 then slides back along crosspiece 81, fits on to the end of hose 74 and repeats the above cycle for another tire 3.

# CLAIMS

1.- A method for manufacturing, on a rotary tire building drum, a first stage radial tire comprising two superimposed tubular layers, a first of the said two layers being arranged inside the second, the said second layer comprising at least one body ply, in turn, comprising a rubber-coated textile layer including parallel textile cords lying in radial planes of the said tire, the said method being characterized by the fact that the said body ply is produced from a textile strip substantially equal in width to the circumferential development of the said tire building drum, the said cords constituting the axial warp of the said textile strip; the said textile strip being coated with elastomeric material for forming a rubber-coated textile strip, the said coated textile strip being fed axially towards the said tire building drum in a direction substantially parallel with the axis of rotation of the said drum, and being subjected to a transverse cutting operation for producing axial portions substantially equal in length to the axial development of the first stage tire, and the said axial portions being fed directly onto the said tire building drum.

2.- A method as claimed in Claim 1, characterized

27

by the fact that said first layer is composed solely of elastomeric materials and comprises a central innerliner, two lateral abrasion strips and two sidewalls, which are obtained by direct extrusion onto a preassembly table adjacent to the said tire building drum, for forming a continuous elastomeric strip having its longitudinal axis substantially perpendicular to the axis of rotation of the said tire building drum, and being equal in width to the said axial development of the said first stage tire; the said continuous elastomeric strip being transversely cut into axial pieces substantially equal in length to the said circumferential development of the said first stage tire, and the said axial pieces being fed axially and directly onto the said drum and being wound about the same in such a manner as to form the said first layer.

3.- A method as claimed in Claim 1 or 2, characterized in that the said coated textile strip is tubular in shape and is obtained by transversely folding the said textile strip in such a manner as to form a continuous cylindrical hose equal in diameter to the said body ply; the said continuous hose being fed, in a direction substantially coaxial with the said axis of rotation of the said drum, through a tubular extrusion die, in such a manner as to be coated with the said elastomeric material and so form the said coated tubular strip, which is then subjected to the said transverse cutting operation for obtaining the said portions which are tubular in shape and fed axially on to the said drum.

4.- A method as claimed in Claim 1 or 2, characterized in that the said coated textile strip is tubular in shape and obtained by transversely folding the said textile strip in such a manner as to form a continuous cylindrical hose equal in diameter to the said body ply; the said continuous hose being fed, in a direction substantially parallel with the said axis of rotation of the said drum, through a tubular extrusion die, in such a manner as to be coated with the said elastomeric material and so form the said coated tubular strip, which is then subjected to a preliminary axial cutting operation performed along the generating line of the said coated tubular strip, for obtaining a flat coated strip substantially equal in width to the circumferential development of the said tire building drum, the said flat coated strip then being subjected to the said transverse cutting operation for obtaining flat axial portions substantially equal in length to the axial development of the said first stage tire, and the said flat portions being fed onto the said drum directly and transverse in relation to both the axis of rotation of the said drum and the said cords.

5.- A method as claimed in Claim 1 or 2, characterized in that the said coated textile strip is a flat strip, and is obtained by coating the said textile strip with elastomeric material by means of a calendering operation; the said flat coated textile strip being fed axially in a direction parallel with the axis of the said drum and being subjected to the said transverse cutting operation for obtaining flat axial portions, and the said flat axial portions being supplied to the said drum in a direction substantially perpendicular to the said travelling direction of the said coated textile strip and transverse in relation to both the said cords and the axis of rotation of the said drum.

Fig.1

Fig.3

Fig.2

0246487

0246497

Fig.4

Fig.5

Fig.6

- 4/5 -

0246497

Fig.7

0246497